# FASCICULE DE BREVET EUROPEEN

(11) **EP 2 665 625 B1**
(45) Date de publication et mention de la délivrance du brevet: **14.04.2021**
(21) Numéro de dépôt: 12701246.6
(22) Date de dépôt: 18.01.2012
(51) Int. Cl.: B60Q 1/076, F21V 14/06, F21S 41/14

(54) **MODULE DE PROJECTION D'UN FAISCEAU**
MODUL ZUR PROJEKTION EINES LICHTSTRAHLS
MODULE FOR PROJECTING A BEAM

(30) Priorité: 20.01.2011 FR 1150444
(43) Date de publication de la demande: 27.11.2013
(73) Titulaire: Valeo Vision, 93012 Bobigny Cedex (FR)
(72) Inventeur: LE BARS, Jean-François, 89275 Elchingen (DE); WALTER, Julien, F-68270 Ruelisheim (FR)
(86) Numéro de dépôt international: PCT/EP2012/050682
(87) Numéro de publication internationale: WO 2012/098142

(56) Documents cités:
- EP-A2- 1 234 716
- EP-A2- 2 138 760
- FR-A1- 2 925 948
- US-A1- 2008 247 182

## Description

La présente invention est relative notamment à un module de projection d'un faisceau lumineux.

Une application préférée concerne l'industrie automobile, pour la réalisation de dispositifs d'éclairage.

Dans ce domaine, on connaît différents modules d'éclairage ou projecteurs, parmi lesquels on trouve essentiellement :
- des feux de position, d'intensité et de portée faibles;
- des feux de croisement, ou codes, d'intensité plus forte et de portée sur la route avoisinant 70 mètres, qui sont utilisés essentiellement la nuit et dont la répartition du faisceau lumineux est telle qu'elle permet de ne pas éblouir le conducteur d'un véhicule croisé. Typiquement, le faisceau présente une coupure oblique en partie supérieure, afin de ne pas éclairer la zone dans laquelle le conducteur d'un véhicule arrivant en sens inverse devrait se trouver. Cette coupure oblique est obtenue par exemple grâce à un cache intégré dans le projecteur et interceptant une partie du flux lumineux émis.
- des feux de route longue portée, dont la zone de portée sur la route peut atteindre 600 mètres, et qui doivent être éteints lorsque l'on croise un autre véhicule afin de ne pas éblouir son conducteur;
- des feux antibrouillard.

Dans la pratique, un conducteur doit donc alternativement passer de la fonction route dans laquelle la visibilité est la meilleur à la fonction code dans laquelle la visibilité est moins bonne mais dans laquelle les conducteurs arrivant en sens inverse ne sont pas éblouis. Cette commutation est source d'insécurité si le conducteur oublie de désactiver la fonction route lorsque un véhicule est croisé ou si le conducteur oublie de repasser de la fonction code à la fonction route alors que la visibilité est trop médiocre. Cette commutation est tout au moins source d'inconfort pour le conducteur.

Dans le but général d'améliorer la sécurité et le confort de conduite en terme de visibilité, il existe dans l'état de la technique, des modules optiques bi fonctions dont la commutation de la fonction code à la fonction route, et vice-versa, est automatique et dépend des conditions de circulation. Avec des véhicules équipés de tels modules bi fonctions, on procède, le plus souvent à l'aide d'une caméra, à la recherche de la présence d'un véhicule susceptible d'être ébloui par une utilisation de la fonction route. Si aucun véhicule n'est détecté, la fonction route est automatiquement activée. Dès que la présence d'un véhicule est détectée, la fonction route est automatiquement désactivée, et le véhicule équipé du projecteur bi fonctions présente de nouveau un faisceau lumineux de type code.

Dans la pratique, la valeur seuil à partir de laquelle l'absence de véhicule détecté autorise la commutation vers la fonction route est approximativement de 400 mètres. Dès qu'un véhicule est détecté à moins de 400 mètres du véhicule équipé, c'est la fonction code qui est activée. Or cette fonction n'assure un éclairage satisfaisant que sur une distance avoisinant 70 mètres au niveau de la partie centrale de la route, et de 100 mètres sur le bas-côté de la voie où circule le véhicule (soit le bas-côté droit dans le cadre d'un trafic à droite); l'éclairage réalisé étant ainsi essentiellement sur la droite de la route dans le cas d'une circulation à droite, le côté gauche de la chaussée étant nettement moins éclairé. Il existe donc de nombreuses configurations de circulation, celles dans lesquelles le premier véhicule susceptible d'être ébloui est situé à plus d'une centaine de mètres et à moins de 400 mètres du véhicule équipé, pour lesquelles l'éclairage de la route pourrait être optimisé sans pour autant éblouir le conducteur d'un quelconque autre véhicule.

On a alors proposé des solutions consistant à découper un faisceau lumineux global émis par un véhicule en différentes portions adjacentes, chaque portion correspondant à un secteur angulaire du faisceau global. Ainsi, si le véhicule croisé ou suivi est présent dans une portion donnée, un faisceau lumineux global optimisé consisterait à rendre non éblouissante uniquement la portion donnée du faisceau lumineux global. Par portion non éblouissante, on désigne un secteur angulaire du faisceau lumineux global dans lequel le faisceau est concentré uniquement sous la ligne d'horizon, lorsqu'il atteint, ou avant d'atteindre, le véhicule suivi ou croisé.

Pour atteindre un tel objectif, une solution de l'état de la technique prévoit de réaliser un projecteur faisant intervenir une pluralité de diodes électroluminescentes (DELs), disposées de telle sorte que chaque DEL, ou groupe de DELs, est plus particulièrement utilisé pour la production du faisceau lumineux dans une des portions du faisceau lumineux global. Pour créer une portion non éblouissante, il suffit alors d'intervenir sur les DELs associées à la portion considérée, par exemple en les éteignant.

Mais une telle solution présente un certain nombre d'inconvénients : d'une part, elle est coûteuse principalement du fait du nombre de DELs utilisées. Ensuite, pour les mêmes raisons, elle est encombrante et lourde. Enfin, elle crée un phénomène de scintillement lorsque le véhicule passe d'une portion à l'autre

Un module de projection d'un faisceau lumineux selon le préambule de la revendication 1 est par exemple connu du document US 2008/247182 A1.

L'invention permet de résoudre tout ou partie des inconvénients des techniques actuelles avec un module de projection d'un faisceau lumineux comportant toutes les caractéristiques de la revendication 1.

Elle concerne donc un module de projection d'un faisceau lumineux comportant une source lumineuse pourvue d'au moins une diode électroluminescente apte à émettre des rayons lumineux et un élément optique doté d'une lentille convergente projetant une image de la source pour produire le faisceau lumineux.

Selon l'invention, ce module est tel qu'il comporte des moyens pour produire une rotation de l'élément optique relativement à la source lumineuse.

Cette disposition permet, par rotation d'une partie seulement du dispositif, de modifier le faisceau émis, en particulier en ce qui concerne sa direction de projection. On produit ainsi un faisceau sélectif, dont la zone éclairée est ajustable, par exemple selon des paramètres de contrôle pouvant inclure une détection d'un véhicule croisé, d'un obstacle sur la chaussée ou en bordure de cette dernière, un virage... L'adaptation de la direction de projection peut être très dynamique dans la mesure où la source lumineuse reste fixe et qu'avantageusement, seul l'élément optique est entrainé en rotation. La légèreté de l'élément optique, possiblement constitué d'une seule lentille éventuellement associée à une armature, permet un ajustement très rapide, avec des quantités d'énergie d'entrainement en rotation relativement faibles.

Un autre avantage potentiel de l'invention est de permettre une réduction de l'encombrement du module. Alors que les systèmes antérieurs à panneaux de pluralité de DELs sont volumineux tant par la multiplicité des DELs que par l'encombrement des moyens de contrôle, d'alimentation et de refroidissement, le module de l'invention n'emploie qu'une source de taille réduite. Ce module peut dès lors être logé à divers endroits du véhicule, par exemple, au niveau d'un pare-chocs ou dans un projecteur (tel un projecteur principal code/route). Avantageusement, la lentille réalise une projection directe de la LED, donc sans utilisation de réflecteur. On améliore encore davantage le faible encombrement du module. De plus en utilisant une seule lentille pour assurer la projection, le moteur actionnant la lentille peut être moins puissant que celui pour actionner les modules avec réflecteurs. Le module peut ainsi comprendre des moteurs plus petits.

Suivant une possibilité, l'axe de rotation passe par la source et préférentiellement par le centre de la source. On entend par là que l'axe coupe la source de sorte que la rotation de l'élément optique ne modifie pas ou pas substantiellement son écartement relativement à la source lumineuse.

Selon l'invention, la source est placée dans le plan focal objet de la lentille si bien que la transformation optique produite par celle-ci n'est pas affectée par le mouvement de rotation.

Selon l'invention, la rotation est d'axe perpendiculaire à la direction moyenne d'émission des rayons de la source lumineuse. Typiquement, la source, telle une ou plusieurs diodes électroluminescentes, est placée sur un plan et la direction moyenne d'émission est normale à ce plan.

D'autres caractéristiques purement optionnelles qui peuvent être mises en œuvre de façon combinée ou alternative sont indiquées ci-après :
- le module comporte des moyens pour produire une rotation additionnelle de l'élément optique relativement à la source lumineuse.
- la rotation additionnelle est d'axe perpendiculaire à l'axe de la rotation.
- l'axe de la rotation additionnelle et l'axe de la rotation se coupent au centre de la source lumineuse.
- l'élément optique comporte une monture montée pivotante suivant l'axe de rotation sur une armature montée pivotante sur un châssis suivant l'axe de la rotation additionnelle.
- l'armature comprend un cadre délimitant un espace intérieur de placement de la source lumineuse.
- le châssis comporte un portique doté de deux branches parallèles jointes par une poutre et entourant le cadre.
- l'axe de rotation a une direction choisie parmi la direction horizontale et la direction verticale. On entend par direction horizontale celle de la ligne d'horizon et par direction verticale la perpendiculaire à la direction horizontale soit encore la direction des forces de gravitation.
- La source lumineuse comporte une diode unique ou une rangée d'au moins deux diodes juxtaposées.
- La source lumineuse est intégrée dans un bloc d'émission fixe relativement au châssis du module.
- Les moyens pour produire la rotation et/ ou la rotation additionnelle comportent un moteur et un ensemble de transmission par engrenages.
- La monture comporte un secteur denté entrainé par les moyens pour produire la rotation.
- L'armature comporte un secteur denté entrainé par les moyens pour produire la rotation additionnelle.
- Le dispositif selon l'invention peut comprendre au moins un moteur piézoélectrique. Le poids de la lentille de faible focale, par exemple comprise entre 10 et 20 mm, et de son support permet d'utiliser ce type de moteur qui présente l'avantage de la compacité et de disposer d'une vitesse de rotation élevée pour de faibles charges.

L'invention a aussi trait à un système d'éclairage comportant un module selon l'invention pour générer un premier faisceau et un dispositif d'éclairage configuré pour générer un faisceau principal présentant une coupure en partie supérieure, et configuré de sorte que le premier faisceau est mobile et est situé au moins en partie au-dessus de ladite coupure. Selon une variante avantageuse, le premier et le deuxième faisceaux étant mobiles indépendamment l'un de l'autre et situés au moins en partie au-dessus de la coupure.

Dans un mode de réalisation, le module est une unité distincte du dispositif d'éclairage. Le système est alors réparti en plusieurs endroits du véhicule.

Suivant une possibilité avantageuse, le module produit une rotation verticale (d'axe horizontale) configurée pour contrôler un niveau de hauteur pour la projection de lumière issue du module. On peut par exemple ainsi coordonner la hauteur de projection avec la coupure horizontale d'un faisceau code, particulièrement lorsque la coupure horizontale du code est contrôlée par un dispositif de correction d'assiette du véhicule de sorte que le positionnement relatif des deux faisceaux reste le même quels que soient les mouvements du véhicule, tout particulièrement lorsque le module est positionné hors du projecteur principal dans le bouclier du véhicule. A titre optionnel, le système d'éclairage comporte un deuxième module selon l'invention agencé pour générer un deuxième faisceau, le premier et le deuxième faisceaux étant mobiles indépendamment l'un de l'autre et situés au moins en partie au-dessus de la coupure.

Dans un premier cas, l'un ou/et l'autre des deux modules peuvent être utilisés à des fins d'éclairage de « type virage » selon que la commande se fait respectivement à l'aide des informations véhicules telles que capteur d'angle volant ou par un dispositif de reconnaissance de la scène tel qu'une caméra

Dans un autre cas, la rotation et, si elle est réalisée, la rotation additionnelle, sont commandées pour illuminer ou éviter d'illuminer des objets détectés par un système de détection. Les objets peuvent être des obstacles, des dangers potentiels ou tout autre objet de la scène jugé d'intérêt pour le conducteur (panneau de signalisation, carrefour,..) et le système de détection peut comprendre entre autre un détecteur infra rouge et/ou un radar et/ou une caméra.

L'invention concerne aussi un projecteur, encore appelé phare, comportant un boîtier de projecteur comprenant un dispositif réalisant une fonction d'éclairage primaire et un module selon l'invention, formant ainsi un ensemble intégral. Suivant une possibilité, la fonction d'éclairage primaire est une fonction code.

L'invention est aussi relative à un pare-chocs équipé d'une réservation recevant un module de l'invention.

L'invention est aussi relative à un véhicule équipé d'au moins un module tel qu'introduit ci-dessus.

D'autres caractéristiques, buts et avantages de la présente invention apparaîtront à la lecture de la description détaillée qui suit, et en regard des dessins annexés donnés à titre d'exemples non limitatifs et sur lesquels :
- la figure 1 est une vue en perspective de certains composants du module de l'invention.
- Les figures 2 et 3 montrent en perspective arrière les composants de la figure 1.
- Les figures 4 et 5 présentent plus particulièrement l'implantation de la source lumineuse et son dispositif de refroidissement
- Les figures 6 et 7 illustrent la coopération entre une partie fixe et des parties mobiles en rotation.
- Les figures 8 et 9 révèlent notamment la forte compacité permise par l'invention.
   La figure 10 est une coupe transversale suivant un plan comprenant l'axe A.
- La figure 11 est une coupe transversale suivant un plan comprenant l'axe B.

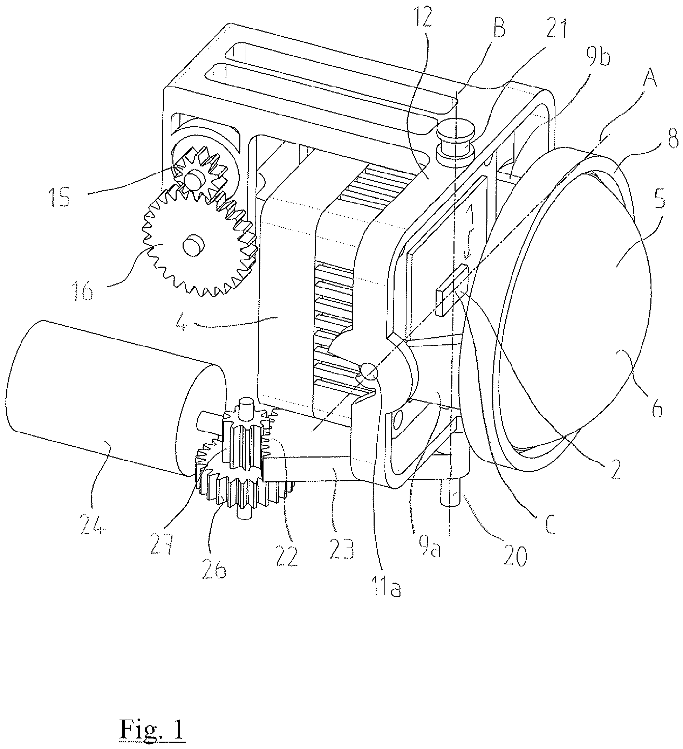

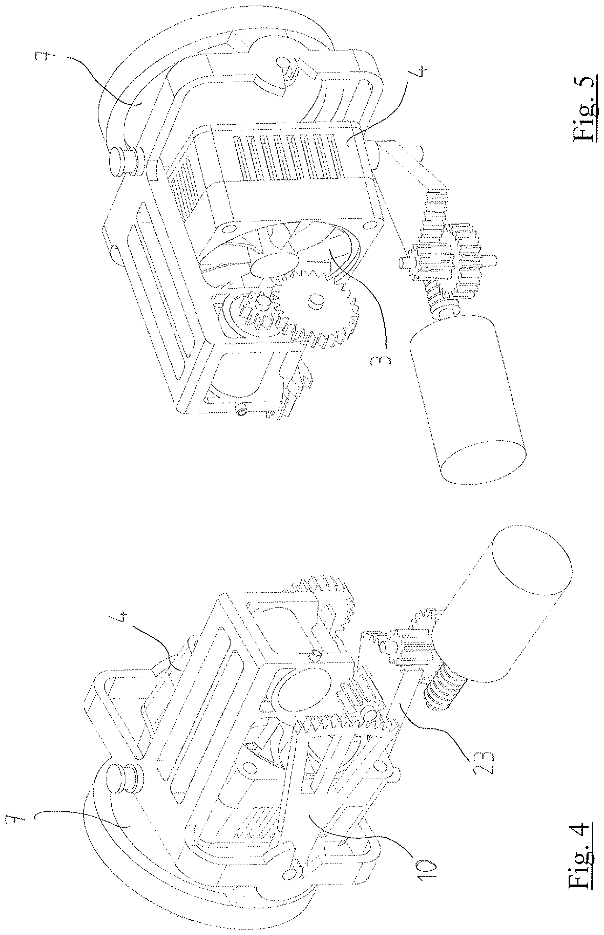

La figure 1 montre un exemple de réalisation de l'invention dans lequel le module de projection comprend une source lumineuse 1 située en face avant d'un bloc 4 intégrant par ailleurs des moyens de refroidissement 3 de la source lumineuse 1, moyens ici sous forme d'un ventilateur plus particulièrement visibles en figure 5. Le bloc 4 renferme aussi avantageusement des moyens de commande de la source en coopération avec une alimentation électrique. La source 1 comprend au moins une diode 2 électroluminescente située sur la face avant du bloc 3 et dont la puissance est adaptée à l'application souhaitée. Il peut s'agir de diodes à surface d'émission à bords abrupts, à savoir, comme dans l'exemple illustré en figure 5, présentant une variation d'intensité lumineuse dans un rapport de l'ordre de 1 à 100 sur une distance de quelques dizaines de microns ou de diodes pourvues d'un écran, pouvant être également une fenêtre optique métallisée, limitant la surface d'émission de façon mécanique par blocage des rayons émis. Les techniques actuelles permettent d'ailleurs de produire des diodes toujours plus puissantes. Par exemple on peut envisager d'employer une diode 2 de technologie assurant une performance de 135 Im/W à 350mA pour une surface de 1 mm² qui générera une émittance de l'ordre de 470 Im/mm² lorsque alimentée sous 2A.

Bien entendu, la source 1 peut disposer de plusieurs diodes, par exemple organisées en une rangée.

Les rayons issus de la source 1 sont reçus, avantageusement par transmission directe, par un élément optique qui comporte une lentille 5. Cette lentille 5 est préférentiellement convergente. Elle comprend une face intérieure 7 qui reçoit les rayons et une face extérieure 6 par laquelle sort le faisceau à projeter. L'exemple de la figure 1 montre une lentille 5 asphérique (par exemple de 30 mm de diamètre effectif avec un indice de transmission de 0,95 et une focale de 15 mm). La face avant de la lentille 5 peut être protégée par une glace d'indice de transmission de 0,85.

On notera que l'invention assure la directionnalité du faisceau sans pour autant impliquer la mobilité de l'ensemble du module. Entraîner ainsi en rotation l'élément optique est particulièrement avantageux car cet organe a un poids bien plus faible que l'ensemble ce qui réduit d'autant la taille de tous les organes. Poids qui, à titre d'exemple, peut encore être réduit en employant une lentille en matériau polymère dont le poids ne dépassera généralement pas quelques grammes. Par rapport aux systèmes existants assurant une fonctionnalité de « selective beam » (faisceau sélectif), le dispositif présente une réduction de poids d'un rapport 4 à 5 et une division par plus de 8 du volume du système.

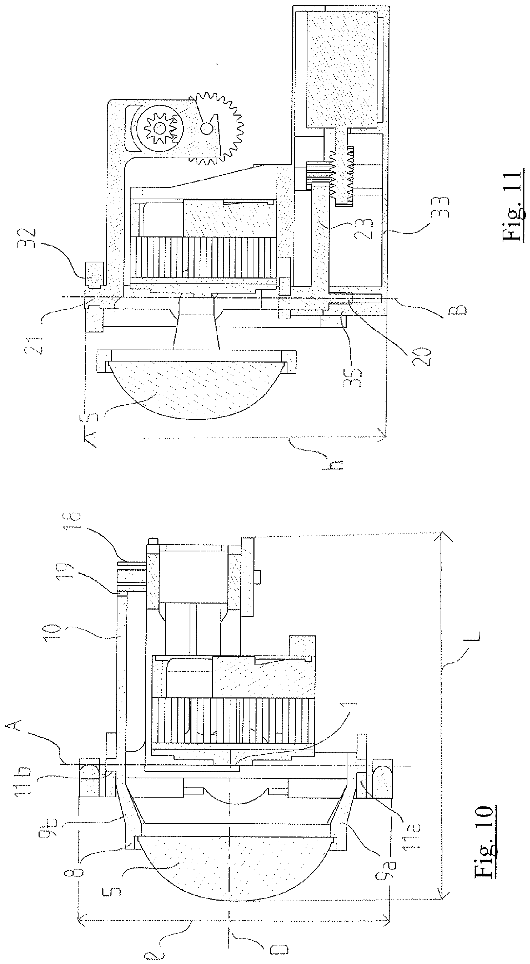

En outre, les figures 10 et 11 illustrent les dimensions h, I et L pouvant respectivement représenter la hauteur, la largeur et la longueur d'un module. Dans le cas d'une lentille de 30 mm de diamètre, on peut obtenir les valeurs suivantes : h : 50 mm, I : 50 mm et L : 75 mm.

La figure 1 illustre par ailleurs que la lentille 5 est solidaire d'une structure comprenant une monture 8 dans l'exemple sous forme d'un cerclage autour du diamètre de la lentille 5.

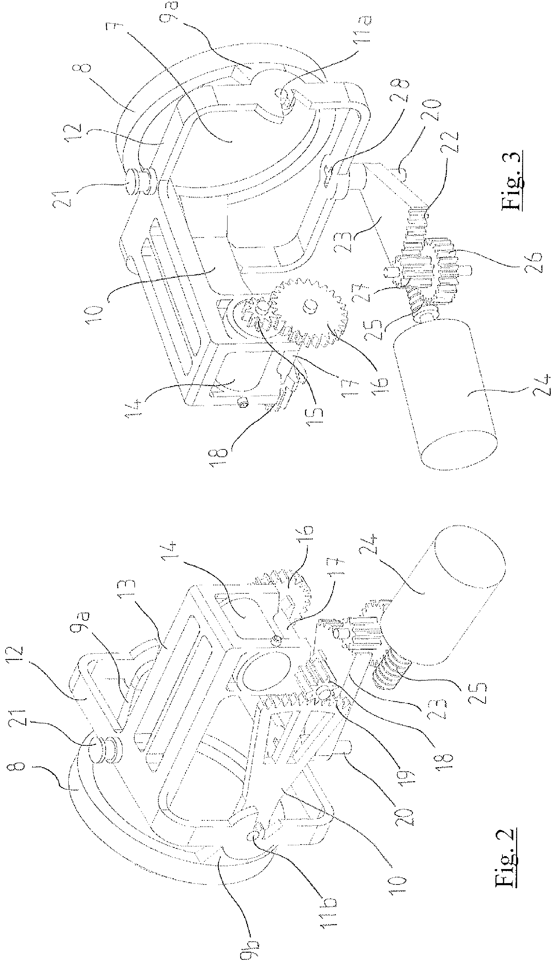

On décrit ci-après un mode de réalisation de la mise en œuvre de la rotation d'axe A, en référence aux différentes figures. La monture 8 de l'élément optique comporte deux pattes 9a, 9b alignées selon la direction A tel que visible en figure 10 et coopérant avec deux paliers respectivement 11a et 11b pour former une articulation pivot d'axe A. A cet effet, les pattes 9a, 9b comprennent préférentiellement chacune une saillie sous forme d'ergots faisant office de pièces mâles reçues dans les paliers 11a, 11b. Les paliers 11a, 11b sont partie d'un ensemble non solidaire de la rotation d'axe A. Si le module ne permet qu'un degré de liberté pour l'élément optique, les paliers 11a, 11b peuvent directement être partie ou solidaire d'un châssis. Dans le mode de réalisation illustré, les paliers 11a, 11b sont formé dans une armature intermédiaire offrant une seconde mobilité en rotation à l'élément optique. Par exemple, les figures 2 et 3 montrent une armature pourvue d'un cadre 12 avec deux parties de flanc dont les extrémités sont rejointes deux à deux par deux parties transversales, les paliers 11a, 11b étant formés chacun sur une partie de flanc. Le cadre 12 a l'avantage de définir un espace intérieur dans lequel la source 1 et son bloc 4 peuvent être logés comme représenté aux figures 4 et 5.

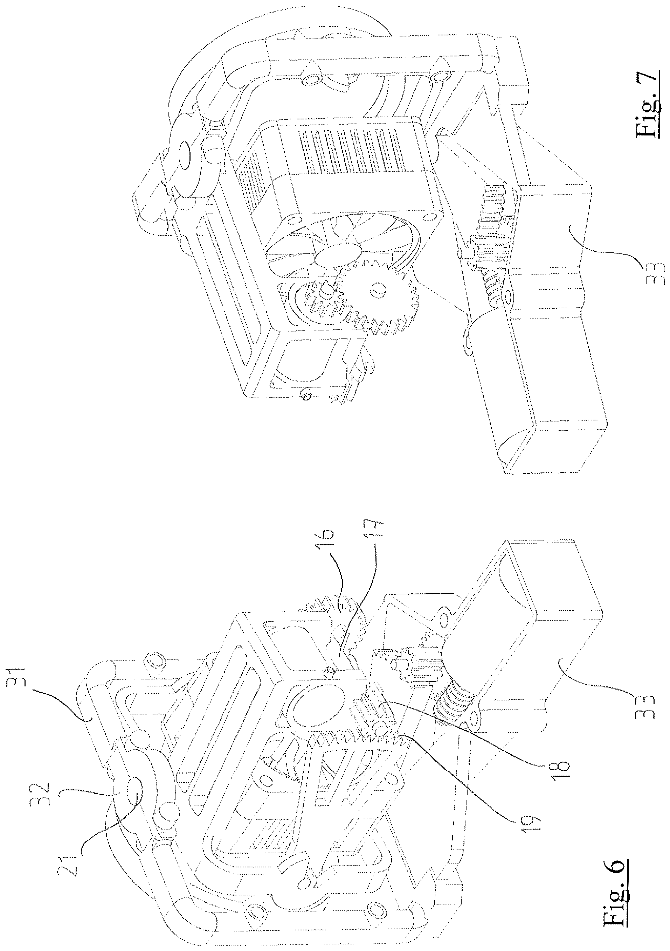

Les parties transversales du cadre 12 comportent chacune un moyen d'articulation, ces moyens étant alignés suivant l'axe B de sorte à former une liaison pivot d'axe B tel que visible en figure 11. Dans le cas des figures, les moyens d'articulation sont des plots 20, 21 faisant saillie autour du cadre 12. Les figures 6 à 11 présentent particulièrement la coopération entre l'armature dotée du cadre 12 et une partie de référence formant châssis 29. Le châssis 29 présente une partie de base 33 supportant le reste du dispositif (et notamment recevant directement le bloc 4) ainsi qu'une structure en portique munie de deux branches 30a, 30b parallèles et orientées suivant la direction B en encadrant les parties de flanc du cadre 12. Le portique comporte aussi une poutre 31 rejoignant les deux branches 30a, 30b en partie supérieure de l'ensemble, au dessus du cadre 12. Vers le milieu de la poutre 31, un palier 32 est présent pour coopérer avec le plot 21 du cadre 12. En regard de cette assemblage, vers le bas du module, le plot 20 coopère avec un siège 35 d'articulation, réalisé dans le châssis 29, ici dans sa partie de base 33. Cette disposition est particulièrement visible en figure 11.

On notera que la structure ainsi construite adopte la cinématique d'un cardan.

Préférentiellement, les axes A et B sont perpendiculaires et se coupent au niveau de la source 1, par exemple au centre C de la surface émettrice de la diode 2. En outre les axes A et B sont avantageusement placés pour être dans le plan de la face avant du bloc 4 dans une position médiane de l'élément optique visible aux figures 10 et 11 et dans laquelle l'axe de symétrie de la lentille 5 est normal au plan de la face avant du bloc 4 (c'est-à-dire aussi que l'axe de la lentille 5 est alors aligné avec la direction moyenne des rayons émis par la source 1, suivant la direction D).

Les matériaux utilisables pour le module ne sont pas limités. On notera que les pièces mobiles en rotation peuvent être réalisées en matériaux légers pour limiter les efforts nécessaires à l'entrainement en rotation. Des matières plastiques polymères rigides peuvent convenir.

Les mobilités en rotation ainsi décrites sont actionnées par des moyens moteurs dont un mode de réalisation est maintenant donné.

Les figures 2 et 3 montrent par exemple nettement l'actionnement de la rotation d'axe A. Un moteur 14 électrique pouvant être du type pas à pas entraine un pignon moteur 15 lui-même engrenant une roue dentée 16. Le moteur 14 est supporté par l'armature dans une portion de support 13 située à l'arrière du cadre 12. L'arbre 17 de la roue dentée 16 est aussi celui d'un pignon de sortie 18 engrenant un secteur denté 19 formé sur un bras 10. Les rapports de transmission sont définis de sorte à permettre le débattement angulaire souhaité. Le bras 10 est dans l'exemple situé dans le prolongement de l'une 9b des pattes 9a, 9b, vers le côté du cadre opposé à la lentille 5. Le bras fait office de levier pour produire la rotation d'axe A.

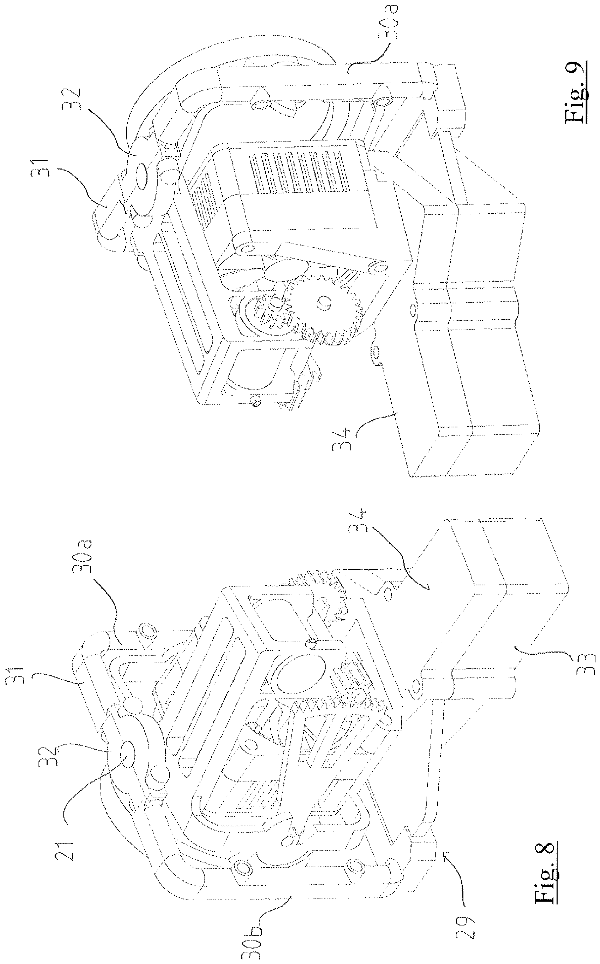

L'actionnement en rotation d'axe B peut être réalisé de manière assez similaire. Un moteur 24 électrique pouvant être du type pas à pas entraine une vis sans fin 25 engrenant une roue dentée 26 dont l'arbre comporte par ailleurs un pignon de sortie 27 lui-même entrainant un secteur denté 22 d'un bras 23. Les rapports de transmission sont définis de sorte à permettre le débattement angulaire souhaité. Les figures 3 et 11 montrent particulièrement la liaison entre le bras 23 et l'armature, au niveau du cadre 12. Ainsi, au voisinage du plot 20, des moyens d'accouplement 28 sont réalisés pour que la rotation du bras 23 soit transmise à la partie transversale inférieure du cadre 12. Les moyens d'actionnement en rotation suivant l'axe B sont avantageusement logés dans la partie de base 33 formant un réceptacle dont le volume intérieur peut être fermé par un couvercle 34. On parvient ainsi à un coffrage dont une illustration apparait aux figures 8 et 9.

On notera que l'actionnement peut aussi être produit par d'autres moyens moteurs tels un moteur piézoélectrique.

Suivant une possibilité, le module peut être intégré en tant qu'organe individuel dans une réservation de la carrosserie d'un véhicule. Il peut aussi être couplé dans un seul ensemble avec des moyens de projection d'autres faisceaux tels un faisceau de type code. Il peut par ailleurs être intégré dans un pare-chocs à la manière d'un projecteur antibrouillard.

Un procédé avantageux réalisable grâce à l'invention est la génération de faisceaux sélectifs (de l'anglais « selective beam ») qui permettent des fonctions d'éclairage très adaptatives selon les conditions de circulation de véhicule équipé, particulièrement celles liées à son environnement, pour tenir compte d'obstacles, de véhicules croisés ou suivis par exemple, de profils de route et particulièrement de virage et/ou d'intersections, de panneaux de signalisation ou tout autre objet de la scène susceptible d'aider à la conduite ou assure la sécurité.

On peut prévoir un système d'éclairage pour véhicule automobile comprenant au moins un dispositif d'éclairage configuré pour générer un faisceau présentant une coupure en partie supérieure (tel un code) et comprenant au moins un module de l'invention configuré pour générer un faisceau additionnel de sorte que le faisceau additionnel est mobile et est situé au moins en partie au dessus de ladite coupure. Ainsi, le système permet d'éclairer au-delà du faisceau à coupure, offrant de ce fait une visibilité améliorée. Par exemple, si le dispositif d'éclairage est configuré pour réaliser un faisceau lumineux de type code présentant une coupure en partie supérieure, le faisceau additionnel permet d'éclairer la route au-delà de la coupure du faisceau de code. La mobilité du faisceau additionnel permet d'adapter la position de ce faisceau additionnel par exemple en fonction de véhicule arrivant en sens inverse, sur la base des informations issues d'une caméra située le plus souvent à l'intérieur du véhicule à hauteur du rétroviseur central. On peut jouer au moins sur une mobilité en rotation selon l'axe B à cet effet (typiquement selon un secteur angulaire compris entre -20° et +20°, et plus avantageusement selon un secteur angulaire compris entre -5° et +18°) et utiliser la rotation d'axe A (typiquement sur un secteur angulaire de - 5° à + 5° pour une correction d'assiette de sorte à contrôler la hauteur du faisceau ou par exemple illuminer des objets situés en hauteur par rapport à la route

Le système décrit ci-dessus peut mettre en œuvre plusieurs modules et notamment deux modules dont les faisceaux peuvent être déplacés de manière non symétrique et/ou non simultanée.

L'invention, basée sur le principe de l'imagerie directe d'une source à bords émissifs abruptes au travers d'un système optique, permet particulièrement de se passer d'un cache intermédiaire, placé au foyer de la lentille convergente, pour occulter une partie du faisceau puisque toute la lumière émise en direction de la zone à éclairer est intrinsèquement limitée spatialement par la construction de la diode. L'encombrement du système est par conséquent limité. De plus, toute la puissance lumineuse émise est utilisée ce qui améliore significativement le rendement énergétique du système. La puissance générée par la source lumineuse peut ainsi être réduite par rapport à un éclairage identique avec cache occultant. En outre, la puissance thermique dissipée au niveau des moyens d'émission est moins importante qu'avec un cache puisque le flux lumineux n'est pas bloqué. L'invention permet par conséquent de réduire les performances et la taille des moyens d'évacuation des calories, limitant de ce fait l'encombrement du système.

L'invention n'est pas limitée aux modes de réalisation décrits mais s'étend à tout mode de réalisation dans le cadre des revendications jointes.

### REFERENCES

1. Source lumineuse
2. diode
3. moyens de refroidissement
4. bloc
5. lentille
6. face extérieure
7. face intérieure
8. monture
9a, 9b patte
10. bras
11a, 11b palier
12. cadre
13. support
14. moteur
15. pignon moteur
16. roue de transmission
17. arbre
18. pignon de sortie
19. secteur denté
20. plot
21. plot
22. secteur denté
23. bras
24. moteur
25. vis sans fin
26. roue de transmission
27. pignon de sortie
28. moyens d'accouplement
29. châssis
30a, 30b branche
31. poutre
32. palier
33. partie de base
34. couvercle
35. siège
A. axe de rotation
B. axe de la rotation additionnelle
C. centre de la source
D. axe longitudinal
h. hauteur
l. largeur
L. longueur

## Revendications

1. Module de projection d'un faisceau lumineux comportant une source lumineuse (1) pourvue d'au moins une diode (2) électroluminescente apte à émettre des rayons lumineux et un élément optique doté d'une lentille (5) convergente projetant une image de la source (1) pour produire le faisceau lumineux,
et comportant des moyens pour produire une rotation de l'élément optique relativement à la source lumineuse (1), la rotation étant d'axe (A) perpendiculaire à la direction moyenne d'émission des rayons de la source lumineuse (1),
**Caractérisé en ce que** la source lumineuse (1) est située dans le plan focal objet de la lentille (5), le module étant basé sur le principe de l'imagerie directe d'une source à bords émissifs abruptes au travers d'un système optique, permettant de se passer d'un cache intermédiaire, placé au foyer de la lentille convergente, pour occulter une partie du faisceau puisque toute la lumière émise en direction de la zone à éclairer est intrinsèquement limitée spatialement par la construction de ladite diode.

2. Module selon la revendication précédente dans lequel les moyens pour produire une rotation sont configurés pour produire une rotation d'axe (A) passant par le centre (C) de la source lumineuse (1).

3. Module selon l'une des revendications précédentes comportant des moyens pour produire une rotation additionnelle de l'élément optique relativement à la source lumineuse (1).

4. Module selon la revendication précédente dans lequel la rotation additionnelle est d'axe (B) perpendiculaire à l'axe de la rotation (A).

5. Module selon la revendication précédente dans lequel l'axe de la rotation additionnelle (B) et l'axe de la rotation (A) se coupent au centre (C) de la source lumineuse (1).

6. Module selon l'une des trois revendications précédentes dans lequel l'élément optique comporte une monture (8) montée pivotante suivant l'axe de rotation (A) sur une armature montée pivotante sur un châssis (29) suivant l'axe de la rotation additionnelle (B).

7. Module selon la revendication précédente dans lequel l'armature comprend un cadre (12) délimitant un espace intérieur de placement de la source lumineuse (1).

8. Module selon la revendication précédente dans lequel le châssis (29) comporte un portique doté de deux branches (30a, 30b) parallèles jointes par une poutre (31) et entourant le cadre (12).

9. Module selon l'une des revendications précédentes dans lequel l'axe de rotation (A) a une direction choisie parmi la direction horizontale et la direction verticale.

10. Système d'éclairage comportant un module selon l'une des revendications précédentes pour générer un premier faisceau et un dispositif d'éclairage configuré pour générer un faisceau principal présentant une coupure en partie supérieure, et configuré de sorte que le premier faisceau est mobile et est situé au moins en partie au-dessus de ladite coupure.

11. Système selon l'une des trois revendications précédentes comportant un deuxième module selon la revendication 1 agencé pour générer un deuxième faisceau, le premier et le deuxième faisceaux étant mobiles indépendamment l'un de l'autre et situés au moins en partie au-dessus de la coupure.

12. Système selon la revendication 10 ou 11 dans lequel le module est une unité distincte du dispositif d'éclairage.

13. Système selon la revendication précédente dans lequel le module est logé dans un bouclier de pare chocs.

14. Projecteur d'éclairage automobile comprenant un boîtier de projecteur comportant un système selon la revendication 10 ou 11.

## Patentansprüche

1. Modul zum Projizieren eines Lichtstrahls mit einer Lichtquelle (1), die mit mindestens einer lichtemittierenden Diode (2) versehen ist, die in der Lage ist, Lichtstrahlen zu emittieren, und einem optischen Element, das mit einer konvergenten Linse (5) versehen ist, die ein Bild der Quelle (1) projiziert, um den Lichtstrahl zu erzeugen, und das Mittel zum Erzeugen einer Drehung des optischen Elements in Bezug auf die Lichtquelle (1) umfasst, wobei die Drehung eine Achse (A) aufweist, die senkrecht zur mittleren Emissionsrichtung der Strahlen der Lichtquelle (1) verläuft, **dadurch gekennzeichnet dass** die Lichtquelle (1) in der Objektivebene des Objektivs (5) angeordnet ist, wobei das Modul auf dem Prinzip der direkten Abbildung einer Quelle mit steilen Emissionsflanken durch ein optisches System beruht, was es ermöglicht, auf eine Zwischenmaske zu verzichten, die im Brennpunkt der konvergenten Linse angeordnet ist, um einen Teil des Strahls zu verdecken, da das gesamte in Richtung der zu beleuchtenden Zone emittierte Licht durch die Konstruktion der besagten Diode intrinsisch räumlich begrenzt ist.

2. Modul nach dem vorhergehenden Anspruch, wobei die Mittel zur Erzeugung einer Drehung so konfiguriert sind, dass sie eine Drehung der Achse (A) erzeugen, die durch das Zentrum (C) der Lichtquelle (1) verläuft.

3. Modul nach einem der vorhergehenden Ansprüche, umfassend Mittel zur Erzeugung einer zusätzlichen Drehung des optischen Elements relativ zur Lichtquelle (1).

4. Modul nach dem vorhergehenden Anspruch, bei dem die zusätzliche Drehung um eine Achse (B) erfolgt, die senkrecht zur Drehachse (A) steht.

5. Modul nach dem vorhergehenden Anspruch, bei dem sich die Achse der zusätzlichen Drehung (B) und die Drehachse (A) im Zentrum (C) der Lichtquelle (1) schneiden.

6. Modul nach einem der drei vorhergehenden Ansprüche, bei dem das optische Element eine Halterung (8) umfasst, die entlang der Drehachse (A) schwenkbar an einem Rahmen (29) angebracht ist, der entlang der Achse der zusätzlichen Drehung (B) schwenkbar an einem Chassis (29) angebracht ist.

7. Modul nach dem vorhergehenden Anspruch, bei dem das Gestell einen Rahmen (12) umfasst, der einen Innenraum zur Platzierung der Lichtquelle (1) begrenzt.

8. Modul nach dem vorhergehenden Anspruch, bei dem der Rahmen (29) ein Portal mit zwei parallelen Schenkeln (30a, 30b) umfasst, die durch einen Träger (31) verbunden sind und den Rahmen (12) umgeben.

9. Modul nach einem der vorhergehenden Ansprüche, bei dem die Drehachse (A) eine Richtung hat, die aus der horizontalen Richtung und der vertikalen Richtung ausgewählt ist.

10. Beleuchtungssystem mit einem Modul nach einem der vorhergehenden Ansprüche zur Erzeugung eines ersten Strahls und einer Beleuchtungseinrichtung, die zur Erzeugung eines Hauptstrahls mit einer oberen Hell-Dunkel-Grenze konfiguriert ist, und die so konfiguriert ist, dass der erste Strahl beweglich ist und sich zumindest teilweise oberhalb der Hell-Dunkel-Grenze befindet.

11. System nach einem der drei vorhergehenden Ansprüche, umfassend ein zweites Modul nach Anspruch 1, das zur Erzeugung eines zweiten Strahls eingerichtet ist, wobei der erste und der zweite Strahl unabhängig voneinander bewegbar sind und sich zumindest teilweise oberhalb der Hell-Dunkel-Grenze befinden.

12. System nach Anspruch 10 oder 11, bei dem das Modul eine von der Beleuchtungseinrichtung getrennte Einheit ist.

13. System nach Anspruch 1, bei dem das Modul in einem Stoßfängerschild untergebracht ist.

14. Kraftfahrzeugscheinwerfer mit einem Scheinwerfergehäuse, das ein System nach Anspruch 10 oder 11 aufweist.

## Claims

1. Module for projecting a light beam comprising a light source (1) provided with at least one light-emitting diode (2) capable of emitting light rays and an optical element provided with a convergent lens (5) projecting an image of the source (1) to produce the light beam and comprising means for producing a rotation of the optical element relative to the light source (1), the rotation being of axis (A) perpendicular to the average direction of emission of the rays of the light source (1),
**Characterised in that** the light source (1) is located in the object focal plane of the lens (5)., the module being based on the principle of direct imaging of a source with steep emissive edges through an optical system, making it possible to dispense with an intermediate mask, placed at the focus of the convergent lens, to occult part of the beam since all the light emitted in the direction of the area to be illuminated is intrinsically spatially limited by the construction of the said diode.

2. A module according to the preceding claim in which the means for producing rotation are configured to produce a rotation of axis (A) passing through the centre (C) of the light source (1).

3. A module according to one of the preceding claims having means for producing additional rotation of the optical element relative to the light source (1).

4. A module according to the preceding claim in which the additional rotation is of axis (B) perpendicular to the axis of rotation (A).

5. The module according to the preceding claim in which the axis of additional rotation (B) and the axis of rotation (A) intersect at the centre (C) of the light source (1).

6. A module according to one of the three preceding claims in which the optical element comprises a mount (8) pivotally mounted along the axis of rotation (A) on a frame (29) pivotally mounted on a chassis (29) along the axis of additional rotation (B).

7. Module according to the preceding claim in which the frame comprises a frame (12) delimiting an internal space for placing the light source (1).

8. A module according to the preceding claim in which the frame (29) comprises a portico having two parallel branches (30a, 30b) joined by a beam (31) and surrounding the frame (12).

9. A module according to one of the preceding claims in which the axis of rotation (A) has a direction selected from the horizontal and vertical directions.

10. A lighting system comprising a module according to one of the foregoing claims for generating a first beam and a lighting device configured to generate a main beam having a cut-off at the top, and configured so that the first beam is movable and is located at least partially above said cut-off.

11. A system according to one of the three preceding claims comprising a second module according to claim 1 arranged to generate a second beam, the first and second beams being movable independently of each other and located at least partly above the cut-off.

12. A system according to claim 10 or 11 in which the module is a separate unit from the lighting device.

13. A system according to claim 1 in which the module is housed in a bumper shield.

14. An automotive headlamp comprising a headlamp housing having a system as claimed in claim 10 or 11.
